# EUROPEAN PATENT APPLICATION

(11) **EP 2 372 320 A1**
(43) Date of publication of application: **05.10.2011**
(21) Application number: 10840214.0
(22) Date of filing: 02.12.2010
(51) Int. Cl.: G01G 9/00, B01D 5/00, F28C 3/08

(54) **QUICK-COOLING DEVICE FOR ORGANIC OR INORGANIC VAPOURS**

(30) Priority: 29.12.2009 CL 22272009
(71) Applicant: Universidad De Concepcion, Concepción 4070386 (CL)
(72) Inventor: WILKOMIRSKY FUICA, Igor, 4070386 (CL)
(74) Representative: Carvajal y Urquijo, Isabel
(86) International application number: PCT/IB2010/055556
(87) International publication number: WO 2011/080627

(57) **Abstract**

A fast cooling equipment for organic or inorganic vapors that comprises a vertical double-truncated-cone body joined by the apex of both cones, provided with an external refrigeration jacket along its entire length;an upper coverlid placed at the base of the upper inverted truncated cone, provided with a central entrance for the vapors to be condensed with a thermal insulating layer; an annular chamber provided with two or more openings or nozzles from which a cold gas is blown; an annular chamber located below the cold gas chamber;an inner central cone located inside the lower section of the condenser body, provided in turn with an internal cooling system and deflecting baffles located at one or more cone levels and in mutually opposing directions between each successive level; and a lower accumulation section for liquids or other condensable materials, provided with a conventional drain system and a lateral exit for gases and liquids that are separated in a conventional cyclone system.

## Description

### BACKGROUND OF THE INVENTION

The condensation of organic or inorganic vapors generated in operations such as distillation of wood (pyrolysis), coal, petroleum or other organic materials, as well as in operations involving metal vapors such as magnesium or cadmium vapors, or volatile inorganic compounds such as titanium tetrachloride (TiCl₄) and the like, requires in a major part of the cases a high cooling rate for these vapors to avoid problems related to undesirable side reactions that could occur if the cooling rate is not fast enough.

One of the central problems occurring when cooling organic or inorganic vapors at high temperature is related to the removal of the major part of heat from these vapors in a time as short as possible, which implies the sensible heat contained in these vapors (which is a function of their mass and specific heat) as well as the latent heat of condensation, which is generally one order of magnitude larger than the sensible heat by unit of vapor mass.

These conditions therefore require contacting the hot vapors with another gas, a liquid or a surface at lower temperatures for a short period of time, generally only seconds, to cool the vapors down to their condensation temperature of less. This problem is particularly important when cooling down vapors produced in processes such as pyrolysis of organic products, e.g. wood, tree bark, forestry wastes, etc., which require a high cooling rate to bring their temperature down from 350 - 600°C to 40 - 60°C in one or two seconds to avoid degradation of biofuels produced by condensation of these vapors.

A large variety of fast cooling methods have been proposed and assayed to rapidly cool down organic and inorganic vapors. However, more than 95% of these processes or equipment use cold surfaces (heat exchangers) such as walls, tubes, tube racks, concentric tubes or double-walled tubes. The cooling element, almost without exception, is water (approximately under 30°C). In exceptional cases, indirect cooling liquids such as ammonia, Freon and others have been used, and also liquid nitrogen at -196°C has been proposed to be used, but in most cases these liquids dilute or alter the composition of the biofuel or the produced condensate.

### STATE OF THE ART

A search of the state of the art has been performed at the main Invention Patent Offices in the world and at national level. Some found documents that are related to the present technology are detailed in the following paragraphs.

### 1. US Patent Application US2009085234 (A1), 2009:"Method and apparatus for cooling pyrolysis effluent".

This patent application claims a process and apparatus for cooling gaseous effluents from hydrocarbon pyrolysis furnace. The apparatus comprises: an internal wall to contact the effluent, including an opening along the perimeter of a gap; an external wall coaxial to the internal wall; an annular cavity external to the internal wall, which comprises at least one part of the external wall, connected to the opening portion of the perimeter; and peripheral extended channel around the perimeter of the internal wall, this channel providing a route that fluidly connects said cavity with the opening of the perimeter ring connected along the perimeter of the internal wall; and a cooling liquid.

### 2. US Patent Application US200US2007007175, 2007: "Method for processing hydrocarbon pyrolysis effluent".

This technology protects a method to treat effluents from hydrocarbon pyrolysis process units, with heat recovery and tar removal. The method comprises passing the gaseous effluents for at least one heat exchanger to cool the gaseous effluents and generate high-pressure steam. Then, the effluent is conducted through at least one secondary heat exchanger with an exchange surface at such a temperature to cause part of the effluent to condense *in situ*, and so the remaining gaseous effluent further condenses too. The condensed tar is removed from the effluent in at least one separator.

### 3. Utility model presented at the Chinese Patent Office CN2814300(Y), 2006: "Fast cooling boiler with new structure".

This technology is directed to a cooling equipment comprising: a manifold; a lower and an upper tube plate; a deposit body; and a connecting duct for the pyrolysis gas outlet from the lower section to the upper section. The manifold is a cylindrical body with a transition inverted cone section, the entrance of which is connected to the lower tube plate. This system has low pyrolysis gas residence times and fast cooling, avoids vortexes, is capable of a large heat exchange, presents low gas pressure drop, has low material consumption, has a simple structure, saves space and has low cost, further restricting pyrolysis gas secondary reactions.

### 4. US Invention Patent US7101463 (B1), 2006:"Condensation and recovery of oil from pyrolysis gas".

This invention claims a system and a process for the recovery of oils from pyrolysis of hydrocarbon-containing materials as well as from tires. The system uses a pair of packed columns sequentially located to recover at least 95% of the oil contained in the pyrolysis gases. The first tower operates over the dew point of the pyrolysis gases to ensure that no water is condensed and to obtain primarily an oil fraction with a high flash point, which is close or higher than 60°C, and a primary steam fraction containing additional oils, combustible gases and water vapor. The vapor fraction is fed into a second column operating below the steam dew point, wherein the oil has a flash point of 34°C or less; a secondary steam fraction containing combustible gases is further provided.

### 5. Invention Patent WO0056841 (A1), with US Priority (US19990275846): "Quenching apparatus".

This invention protects an apparatus for gas cooling and a cooling section associated to a gas stream from a pyrolysis furnace. Said apparatus comprises: a first conductor means to conduct the gas from the upper outlet to a lower location; a flow obstructing means located inside said conductor means to form a low pressure section; a second conductor means that intercepts the first conductor means tangentially at the same angle, said second conductor being adapted to inject a cooling liquid into said hot gas flow at a pressure sufficient to cause a circular flow around the inner surface of the first conductor means, fill the low pressure zone and contacting the lower face of said obstruction means; and an interface means on said lower face of the obstruction means to provide an interface between the hot gas stream and the cooling liquid.

### 6. Invention Patent WO9312200 (A1), with US Priority (US19910805229): "Method for simplifying quench and tar removal facilities in steam crackers".

A method is disclosed for quenching the effluent from hydrocarbon pyrolysis units and removing heavy oils and tars to prevent their accumulation in the recycled quench water. Gaseous pyrolysis effluent is initially cooled to a target temperature close to or at the dew point of water at the pressure in the effluent stream; the effluent is then conducted into a separation vessel to remove some heavy oils and condensed tars. After the initial cooling, the effluent is conducted into a conventional cooling tower and its temperature is reduced until the effluent is chemically stable, which is performed by direct contact with the cooling liquid (water) introduced in this section.

### 7. Japanese Invention Patent JP62223294, 1987: "Apparatus for cooling pyrolysis gas".

An apparatus is disclosed for cooling pyrolysis gases that includes a first inlet duct to conduct pyrolysis gases directly into each tube of a multiple-tube hydrocarbon pyrolysis furnace; the gas is inserted into the central part of the inlet duct; a second pyrolysis gas is placed in the outer section of the first pyrolysis gas inlet duct concentric to said inlet duct; and the refrigeration gas is incorporated between the first and the second inlet of the pyrolysis gas. The second gas inlet duct is connected to the first inlet at its upper section and is provided at its lower section of a cooled pyrolysis gas outlet section.

### 8. US Invention Patent US4714109 (A), 1987: "Gas cooling with heat recovery".

This patent protects a fast gas cooling process with simultaneous heat recovery that is carried out by directly contacting the gas with finely divided solids, and then heat is recovered by passing said solids through at least two tanks wherein solids are kept as a fluidized bed. The pyrolysis effluent at a temperature higher than 1200°F can be rapidly cooled and an effective heat recovery is simultaneously provided. Heat from the solids is recovered in at least two steam generation sections.

### 9. Spanish Invention Patent ES8204155A1 with US priority US19790106060, 1979: "Un procedimiento para recuperar calor del efluente de un reactor de pirólisis de hidrocarburos" ("Procedure to recover heat from the effluent of a hydrocarbon pyrolysis reactor").

The invention discloses a procedure to rapidly and indirectly cool an effluent in a first cooler down to at least 540°C; passing the effluent into a second cooler that comprises a direct fast cooling modeler section in communication with an indirect fast cooling section to provide heat to water by contacting the first effluent in the modeler section with a cooling liquid to produce a mixture at 400°C or more; then rapidly and indirectly cooling said mixture in the second cooler with simultaneous production of high pressure steam, and producing a mixture at 370°C or more; and passing said mixture through a fractionated distillation section; then separating said mixture and passing said mixture through a heat exchanger; recovering the heat from the extraction stream; producing a cooler extraction stream; and finally recycling at least part of the cooler extraction stream back to the distillation section.

### 10. US Invention Patent US3907661, 1973: "Process and apparatus for quenching unstable gas".

This technology is related to a process for cooling pyrolysis products at a temperature higher than 1400°F, by passing them through a cooling (quenching) section until the liquid is introduced as a fine film onto the wall of the cooling section, to decrease its temperature below 700°F where the product is stable. The patent also discloses an apparatus that includes a cylindrical cooling section with means suitable to introduce a cooling liquid onto the walls thereof to form an abrupt liquid film.

### 11. US Invention Patent US4151217 (A) with Japanese priority JP19720066321: "Method of cooling cracked gases of low boiling hydrocarbons".

This invention is directed to avoid the formation and accumulation of coke and other products derived from olefins produced by hydrocarbon pyrolysis. This is carried out by keeping a transference section extending from the outlet section of a pyrolysis reaction duct of a multiple-tube device at a temperature below 450°C. This technique is especially suitable for the manufacture of olefins by hydrocarbon pyrolysis that are gaseous at room temperature and atmospheric pressure or liquid hydrocarbons having an average volumetric boiling point under 90°C, at temperatures between 750-900°C, followed by cooling in a multi-tube cooling apparatus.

The previously cited documents do not interfere nor reproduce completely the technology disclosed herein, and therefore do not affect the novelty and inventive step requisites thereof.

### DESCRIPTION OF THE INVENTION

The present disclosure is directed to a fast (flash) vapor cooling equipment that uses a combined cooling system comprising:
- a cold gas, preferably a non-condensable gas obtained from pyrolysis of organic products, specifically from wood, forestry wastes or organic products, coal, petroleum, metals or inorganic compounds, or an inert gas such as nitrogen and the like, at a temperature of 60°C or lower;
- a liquid, preferably a biofuel obtained from pyrolysis of organic compounds, wood or forestry wastes;
- water or other liquid or gaseous cooling agent to be circulated along refrigerated walls.

This combination of cooling mechanisms generate a synergism between each other manifested in the form in which each mechanism acts: the cold gas (under 60°C) decreases almost instantaneously the temperature of vapors when mixed with them. In the case of vapor from pyrolysis of wood, organic products or forestry wastes, this allows decreasing the temperature from 350-800°C to 80-300°C, preferably to 100-150°C, which then condensate at a temperature ranging from 15 to 60°C on a cold liquid film that flows on the condenser walls on a time not longer than 5 seconds.

On one hand, the specific heat of vapors to be condensed generally ranges from 0.05 to 0.2 cal/g °C, whereas for liquids such as biofuels, the specific heat ranges from 0.2 to 0.8 cal/g °C. On the other hand, the latent heat of condensation of vapors can vary from 3 to 5 cal/g °C, which is over two magnitude orders higher than the specific heat of the gas or one magnitude order higher than the specific heat of the liquid.

Therefore, this requires continuously removing a large amount of heat from the cooling element that absorbs the condensed product (liquid), which is obtained using walls externally cooled with water, other liquid or gas, which efficiently transfer heat from the liquid film that flows inside the condenser.

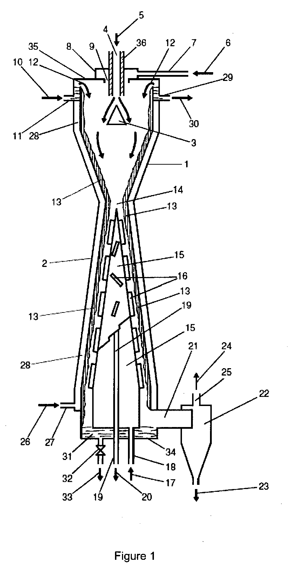

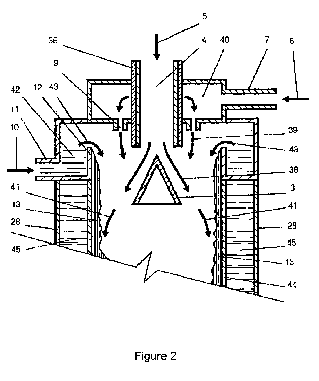

In what follows, a detailed description of the technology is presented with reference to Figures 1 and 2.

In Figure 1, the fast cooling equipment is schematized, which comprises an upper body **1** that is formed by an inverted truncated cone joined by its apex or throat **14** with a lower truncated-conic body **2**, thus forming a double cone similar to so-called Venturi equipment generally used to scrub gases in the industry.

The entire body of the fast cooling equipment is provided of an outer cooling jacket **28**, inside which a cooling liquid such as water at a temperature lower than 60°C flows.

In the upper section of the upper inverted truncated cone of the cooling equipment, a cover lid **35** of the equipment is placed, which has a duct **4** in its central section provided with a thermal insulation **36**, through which high-temperature vapors **5** to be condensed enter into the equipment. The thermal insulation **36** avoids condensation of products of the high temperature gases inside duct **4** until said gases contact the cold gas. Hot vapors emerging from duct **4** are rapidly mixed with cold gas emerging from a system of two or more openings or nozzles **9** located at the perimeter around duct **4**. This cold gas **6** can be a non-condensable pyrolysis gas or other gas, and enters into the cooling equipment through duct **7**, flowing toward the annular gas distributor **8** to emerge through two or more radially located perforations or nozzles **9** in order to mix rapidly and homogeneously with the vapors to be condensed.

The mixture of hot vapors and cold gas impacts a dispersion cone **3** that deflects the gas flow to the periphery of the inner upper section of the cooling equipment, wherein said gases contact a liquid layer or film at a temperature of 60°C or lower, which can be e.g. a liquid biofuel **10** externally cooled down to a temperature of 60°C or lower in a conventional equipment, which is fed into the cooling equipment through a duct **11** and flows over an annular dam **12** to form a liquid layer or film **13** that gravitationally flows down on the internal walls of the equipment, thus cooling and condensing the vapors and integrating the condensate into the liquid flowing into the neck **14** of the cooling equipment, wherein said liquid faces a central cone **15** located inside the lower truncated cone of the cooling equipment. The cone **15** is provided with deflecting baffles **16** located at two or more levels and at opposing positions between each level, thus generating a strong turbulence inside the gas and forcing it to contact the liquid film **13** that descends on the walls of the cone and thus completing the condensation of vapors.

The mixture **21** of non-condensable gases and liquid passes into a conventional gas-liquid separation system such as a cyclone **22** wherein the liquid **23** is separated from the non-condensable gas **24** that exits the cyclone through the upper cyclone section **25**, which can flow into another additional gas-liquid separation system if desired.

All the wall of the cooling equipment, excepting the upper coverlid **35** and the bottom **34** thereof, are provided with cooling jackets **28**, inside which a liquid such as water or other gas **26** flows at a temperature of 60°C or lower, which enters into the lower section **27** and exits at **30** in the upper section **29**. Likewise, the internal lower cone **15** has an admission system **18** for refrigeration liquid or gas **17**, which overflows through its central inner section into a duct **19**, through which the refrigeration liquid or gasexits at **20**. Any residual liquid **31** accumulated in the lower section of the condenser **34** is extracted at **33** through a valve **32**.

In Figure 2, a more detailed schematic view of the upper section of the cooling equipment is shown. In this Figure, vapors to be condensed **5** enter into the equipment through a central duct **4** thermally insulated with an insulation layer **36**. The vapors **38** face the flow of a cold gas **6**, which enters through a duct **7** into an upper chamber **40**, which is provided with two or more openings or nozzles **9** to effect the mixture of cold gases **39** and vapors **38**, thus decreasing the temperature thereof, this mixture being conducted to the periphery of the cooling equipment to contact the liquid film **13** through a central diffusion cone **3**.

The mixture of vapors and gas **41** enters into contact with a cold liquid film **13** at 60°C o less, which can be a biofuel or other liquid **10** that is cooled out of the cooling equipment and enters into the cooling equipment through a duct **11** to form a liquid ring **42** that flows over the annular dam **13** at **43** to form a film that gravitationally flows **13** over the inner wall **44** of the cooling equipment, said walls being provided with an external refrigeration jacket **28** inside which a cooling refrigerating liquid or gas **45**, such as water or the like, flows at a temperature of 60°C or lower.

### APPLICATION EXAMPLE

Vapor from fast pyrolysis of radiata pine sawdust at a temperature of 480°C was cooled in the fast cooling equipment for organic or inorganic vapors of the invention. Previously obtained non-condensable pyrolysis gas in a ratio of 4 volumes of gas at 15°C per each volume of vapor at 480°C, and bio-oil obtained from a previous operation in a flow ratio of 1 volume of liquid (bio-oil) per each 20 volumes of pyrolysis vapor were used. The cooling equipment had external walls refrigerated with circulating water that entered at 15°C.

The condensation efficiency of bio-oil vapors (referred to the total condensable fraction) was 96.8%.

## Claims

1. A fast cooling equipment for organic or inorganic vapors generated in the pyrolysis of organic material or condensation of vapors of metals or inorganic compounds, wherein said equipment comprises:
a. a vertical double-truncated-cone body joined by the apex of both cones, provided with an external refrigeration jacket along its entire length;
b. an upper coverlid placed at the base of the upper inverted truncated cone, provided with a central entrance for the vapors to be condensed with a thermal insulating layer; an annular chamber provided with two or more openings or nozzles from which a cold gas is blown; an annular chamber located below the cold gas chamber;
c. an inner central cone located inside the lower section of the condenser body, provided in turn with an internal cooling system and deflecting baffles located at one or more cone levels and in mutually opposing directions between each successive level;
d. a lower accumulation section for liquids or other condensable materials, provided with a conventional drain system and a lateral exit for gases and liquids that are separated in a conventional cyclone system.

2. A fast cooling equipment for organic or inorganic vapors according to claim 1, wherein the cooling equipment uses a combined system comprising: a gas, preferably at a temperature below 60°C; a liquid, preferably at a temperature below 60°C; and a liquid or a gas, preferably water at 60°C or less that flows inside the external refrigerating jacket, to condense the vapors.

3. A fast cooling equipment for organic or inorganic vapors according to claims 1 or 2, wherein the vapors to be condensed are, preferably, vapors produced in distillation or pyrolysis processes of wood, forestry products, organic materials, coal, petroleum, metals or inorganic compounds.

4. A fast cooling equipment for organic or inorganic vapors according to claims 1 or 2, wherein the cooling gas is, preferably, a non-condensable gas from distillation or pyrolysis processes of wood, forestry products, organic materials, coal, petroleum, metals or inorganic compounds, or an inert gas such as nitrogen or the like at a temperature of 60°C or lower.

5. A fast cooling equipment for organic or inorganic vapors according to claims 1 or 2, wherein the cooling liquid is, preferably, a biofuel produced in distillation or pyrolysis processes of wood, forestry products, organic materials, coal, petroleum, or other inorganic or organic liquid at a temperature of 60°C or lower.
